# EUROPÄISCHE PATENTSCHRIFT

(11) **EP 2 364 938 B1**
(45) Veröffentlichungstag und Bekanntmachung des Hinweises auf die Patenterteilung: **03.05.2017**
(21) Anmeldenummer: 11157920.7
(22) Anmeldetag: 11.03.2011
(51) Int. Cl.: B65G 69/28

(54) **Verfahren zum Betrieb einer Überladebrücke**
Method for operating an overload bridge
Procédé destiné au fonctionnement d'un pont de transbordement

(30) Priorität: 13.03.2010 DE 102010011325
(43) Veröffentlichungstag der Anmeldung: 14.09.2011
(73) Patentinhaber: Novoferm GmbH, 46419 Isselburg (DE)
(72) Erfinder: Köppe, Jörg, 30952, Ronnenberg (DE); Schmedt, Thomas, 59379 selm (DE)
(74) Vertreter: Lorenz, Bernd Ingo Thaddeus

(56) Entgegenhaltungen:
- EP-A2- 0 884 477
- DE-A1- 3 121 994
- DE-U1- 9 102 364
- US-A- 5 826 291
- US-A1- 2005 028 723

## Beschreibung

Die Erfindung betrifft ein Verfahren zum Betrieb einer Überladebrücke zum Be- und Entladen von Nutzfahrzeugen oder Containern. Gemäß der allgemeinen Bauweise umfasst die Überladebrücke, die auch als Anpassrampe bezeichnet wird, eine von einem Rampenantrieb bewegbare Überladerampe, Ein- und/oder Ausgabeelemente und eine Steuerung, an die der Rampenantrieb sowie die Ein- und/oder Ausgabeelemente angeschlossen sind. Gegenstand der Erfindung ist auch eine Überladebrücke, deren Steuerung zur Durchführung des erfindungsgemäßen Verfahrens eingerichtet ist.

Überladebrücken werden dazu eingesetzt, um bei dem Be- und Entladen von Lastkraftwagen und Containern Güter und Waren schwellenfrei bewegen zu können. Die Überladerampe ist dazu an ihrer einen Seite drehbar in Höhe der angrenzenden Bodenfläche gelagert. Die andere Seite der Überladerampe ist in der Höhe variierbar und umfasst ein bewegliches Auflageelement. Als Auflageelemente sind einerseits Klapplippen und andererseits Vorschublippen bekannt. Überladerampen mit Klapplippen sind wirtschaftlich und leicht zu handhaben. Bei Vorschublippen ergibt sich dagegen der Vorteil, dass diese bezüglich ihrer Ausfahrlänge genau positioniert werden können, so dass auch bei einer nur kurzen Überdeckung der Ladefläche des Nutzfahrzeuges oder Containers oder bei einer ungenauen Ausrichtung eine sichere und zuverlässige Verbindung erreicht werden kann. Bekannte Ausführungen von Überladebrücken sind in dem Firmenprospekt der Novoferm GmbH "Verladesysteme", Ausgabe: Januar 2009, dargestellt.

Gemäß den aus der Praxis bekannten Ausführungen erfolgt die Bewegung der Überladerampe mittels des Rampenantriebes üblicherweise hydraulisch. Die bekannten Überladebrücken können außerhalb der Betriebszeiten vollständig vom Netz getrennt werden und sind dann insgesamt funktionslos. Das Dokument EP 0 884 477 A2 offenbart ein Verfahren zum Betrieb einer Überladebrücke zum Be- und Entladen von Nutzfahrzeugen oder Containern nach dem Oberbegriff des Anspruchs 1. Der vorliegenden Erfindung liegt die Aufgabe zugrunde, ein Verfahren zum Betrieb einer Überladebrücke zum Be- und Entladen von Nutzfahrzeugen und Containern anzugeben, welches eine Reduzierung des Energiebedarfs ermöglicht.

Gegenstand der Erfindung und Lösung der Aufgabe ist ein Verfahren gemäß Patentanspruch 1. Erfindungsgemäß ist ein Bereitschaftsmodus vorgesehen, bei dem eine erste an die Steuerung angeschlossene Gruppe von elektrischen Einrichtungen, die den Rampenantrieb umfasst, von einer Spannungsversorgung getrennt wird und eine zweite an die Steuerung angeschlossene Gruppe von elektrischen Einrichtungen, die zumindest einen Teil der Ein- und/oder Ausgabeelemente umfasst, betriebesbereit ist, wobei die erste Gruppe von elektrischen Einrichtungen nach einer Aktivierung aus dem Bereitschaftsmodus in einen Betriebsmodus an die zugeordnete Spannungsversorgung angeschlossen wird.

Gemäß der vorliegenden Erfindung erkennt die Steuerung, ob die Überladerampe sich in einer Arbeitsstellung oder eine Ruheposition befindet. Befindet sich die Überladerampe in einer Ruheposition, erfolgt ein Übergang in den Bereitschaftsmodus, wobei zumindest der Rampenantrieb und vorzugsweise auch weitere in dem Bereitschaftsmodus nicht benötigte Verbraucher vollständig abgeschaltet werden. Die Sicherheitsfunktionen der Steuerung werden jedoch nicht beeinträchtigt, da diese der zweiten Gruppe von elektrischen Einrichtungen zugeordnet sind, so dass die permanente Verfügbarkeit aller Sicherheits- und Komfortfunktionen gewährleistet wird.

Durch eine manuelle Betätigung der im Bereitschaftsmodus noch aktiven Eingabeelemente oder durch ein Steuersignal kann unmittelbar ein Übergang in den Betriebsmodus erfolgen. Gegenüber bekannten Verfahren zum Betrieb von Überladebrücken ergibt sich im Bereitschaftsmodus eine erhebliche Reduzierung des Energiebedarfs, wodurch geringere Betriebskosten und eine geringere Belastung der Umwelt erreicht werden.

Gemäß einer bevorzugten Ausgestaltung des erfindungsgemäßen Verfahrens weist die Steuerung einen Speicher auf, in dem die Dauer des Bereitschaftsmodus und/oder der Energiebedarf während des Bereitschaftsmodus einerseits sowie die Dauer des Betriebsmodus und/oder der Energiebedarf während des Betriebsmodus andererseits abgespeichert werden. Anhand dieser Daten kann die Energieersparnis beispielsweise in Form von Tabellen oder Diagrammen ausgewertet werden. Der Nutzen des erfindungsgemäßen Verfahrens kann dadurch unmittelbar verdeutlicht werden. Des Weiteren bestehen auch die Bestrebungen in einem Gesamtbetrieb den Verbrauch von Ressourcen möglichst genau aufzuschlüsseln, um Einsparpotentiale zu erkennen und ökonomisches sowie ökologisches Verhalten insbesondere gegenüber Kunden und Geschäftspartner nachweisen zu können.

Im Rahmen des erfindungsgemäßen Verfahrens ist vorgesehen, dass in dem Bereitschaftsmodus die erste Gruppe von elektrischen Einrichtungen von der Spannungsversorgung getrennt wird. Die Steuerung muss deshalb dazu in der Lage sein, zu erkennen, ob die Überladebrücke gegenwärtig genutzt wird. Wenn die Überladebrücke beispielsweise auf einem Nutzfahrzeug oder Container aufliegt, darf kein Übergang in den Bereitschaftsmodus erfolgen, da die Überladerampe Bewegungen des Nutzfahrzeugs bzw. des Containers folgen muss. Bewegungen können insbesondere dadurch auftreten, dass schwere Gegenstände angehoben und bewegt oder Entladefahrzeuge mit einem erheblichen Eigengewicht genutzt werden.

Um zu erkennen, wann während des Betriebsmodus ein Übergang in den Bereitschaftsmodus erfolgen kann, ist gemäß einer ersten Variante des Verfahrens vorgesehen, eine Ruheposition der Überladerampe durch einen Sensor zu erfassen, der dann einen Wechsel in den Bereitschaftsmodus bewirkt.

Eine erfindungsgemäße Vereinfachung des Verfahrens ergibt sich jedoch, wenn der Übergang in den Bereitschaftsmodus allein aus der zeitlichen Abfolge von bestimmten Steuerbefehlen abgeleitet werden kann. So kann vorgesehen sein, die Überladerampe durch eine Betätigung eines Eingabeelementes, beispielsweise einer Taste, oder durch ein Steuersignal mittels des Rampenantriebes in eine Ruheposition zu verfahren, wobei nach der Betätigung des Eingabeelementes oder nach dem Steuersignal der Übergang in den Bereitschaftsmodus nach einer vorgegebenen Zeitverzögerung erfolgt. Die Zeitverzögerung ist so gewählt, dass innerhalb dieser Zeitspanne die Überladerampe unter allen Umständen die Ruheposition erreicht. Eine genaue Überwachung dieser Position durch einen Sensor ist dann nicht erforderlich.

Der Rampenantrieb umfasst eine Hydraulikanordnung mit einem Motor und zumindest einem Magnetventil. Um das Heben und Absenken der Überladerampe sowie das Ausklappen bzw. Ausfahren eines Auflageelementes der Überladerampe zu bewirken, kann beispielsweise mit einem Magnetventil oder mit zwei getrennten Magnetventilen zum Heben sowie zum Senken gearbeitet werden. Wenn sich die Überladerampe in der Ruheposition befindet und ein Übergang der Steuerung in den Bereitschaftsmodus erfolgt ist, sind der Motor sowie das zumindest eine Magnetventil von der Spannungsversorgung getrennt.

Für die weitere Ausgestaltung des Verfahrens ergeben sich eine Reihe verschiedener Möglichkeiten. So kann vorgesehen sein, dass in dem Bereitschaftsmodus auch die Steuerung von einer Netzspannung getrennt wird, wobei zur elektrischen Versorgung der Steuerung ein Energiespeicher vorgesehen ist. Dieser Energiespeicher gewährleistet dann, dass die Steuerung in dem Bereitschaftsmodus noch betriebsbereit bleibt. Bei einer aufwendigen Steuereinrichtung ist es auch denkbar, einzelne Segmente der Steuerung selbst abzuschalten, wobei zumindest die Segmente, welche speziellen Sicherheitsfunktionen zugeordnet sind, aktiv bleiben. Der Energiespeicher kann während des Betriebsmodus wieder aufgeladen werden. Um bei einem langanhaltenden Bereitschaftsmodus eine vollständige Entleerung des Energiespeichers zu vermeiden, kann auch ein separater Lademodus vorgesehen sein, der beispielsweise durch eine Ladezustandskontrolle des Energiespeichers aktiviert wird.

In dem Bereitschaftsmodus kann auch die zweite Gruppe von elektrischen Einrichtungen von der Netzspannung getrennt und stattdessen von dem Energiespeicher mit elektrischer Energie versorgt werden. Trotz einer vollständigen Netztrennung bleiben so die Sicherheits- und Komfortfunktionen erhalten.

An die Steuerung können verschiedenste elektrische Einrichtungen angeschlossen sein. Hierzu zählen neben dem zuvor genannten Rampenantrieb Annäherungssensoren, insbesondere zur Detektierung eines einfahrenden Lastwagens, Ausgabeeinrichtungen, beispielsweise in Form von Lampen, Signalhörnern, Ampeln oder dergleichen, Fahrzeugblockiereinrichtungen, Radkeilsensoren, Sensoren zur Bestimmung der Position der Überladerampe, Antriebe von Dichtungen und Toren, die gemeinsam mit der Überladebrücke komplette Verladeeinheiten oder Schleusen bilden, Sensoren derartiger Dichtungen und Tore. Denkbar ist es auch, fahrzeugspezifische Daten durch einen Fahrzeugsensor oder eine Kommunikationsschnittstelle auszulesen.

Während Überwachungssensoren üblicherweise der zweiten Gruppe von elektrischen Einrichtungen zugeordnet sind, die auch im Bereitschaftsmodus mit Energie versorgt werden, können Fahrzeugblockiereinrichtungen sowie weitere Antriebe von Dichtungen und Toren in dem Bereitschaftsmodus auch deaktiviert und erst wieder bei dem Übergang in den Betriebsmodus an die Spannungsversorgung angeschlossen werden.

Gegenstand der Erfindung ist auch eine Überladebrücke zum Be- und Entladen von Nutzfahrzeugen oder Containern mit einer von einem Rampenantrieb bewegbaren Überladerampe, Ein- und/oder Ausgabeelementen und einer Steuerung, an die der Rampenantrieb sowie die Ein- und/oder Ausgabelemente angeschlossen sind, wobei die Steuerung zur Durchführung des zuvor beschriebenen Verfahrens eingerichtet ist. Insbesondere müssen geeignete Steuerbefehle in einem Speicher der Steuerung hinterlegt sein oder in Form einer Signalfolge an den Speicher übermittelt werden.

Die Erfindung wird im Folgenden anhand von Beispielen erläutert.

### Beispiel 1:

Eine Überladebrücke, deren Überladerampe mit einer Klapplippe als Auflageelemente ausgerüstet ist, weist einen hydraulischen Rampenantrieb mit einem Motor und einem Magnetventil auf. Um die Überladerampe zu heben, werden der Motor und das Magnetventil betrieben. Ein Absenken der Überladebrücke erfolgt durch eine entsprechende Betätigung des Magnetventils.

Wenn sich die Überladerampe in einer Ruheposition in dem Bereitschaftsmodus befindet, wird durch Drücken einer ersten Taste ("Heben") ein Übergang in den Betriebsmodus ausgelöst, wobei die Überladerampe durch Betätigung des Motors hydraulisch angehoben wird und wobei im angehobenen Zustand der Überladerampe die an der Vorderseite angeordnete Klapplippe ausgeklappt wird. Danach sinkt die Überladerampe mit der ausgeklappten Lippe auf die Ladefläche eines an die Überladebrücke herangefahrenen Nutzfahrzeuges oder Container herunter. Der Motor und das Magnetventil bleiben aktiv, um in einer sogenannten Schwimmstellung Bewegungen des Nutzfahrzeuges bzw. Containers zu folgen.

Die Überladerampe kann durch Betätigen einer zweiten Taste ("Return") automatisch zurück in die Ruheposition gefahren werden. Nach dem Betätigen der zweiten Taste hebt sich die Überladebrücke zeitgesteuert an, so dass dann das Nutzfahrzeug bzw. der Container von der Überladebrücke weggefahren werden kann. Nach Ablauf einer dafür vorgesehenen Verzögerung sinkt die Überladerampe ab. Ausgehend von dem Signal zu einem Absenken der Überladebrücke wird nach einer vorgegebenen Zeitverzögerung der Bereitschaftsmodus aktiviert, wobei sowohl der Motor als auch das Magnetventil ausgeschaltet, das heißt, von ihrer Versorgungsspannung getrennt werden. Als Verzögerung vor dem Aktivieren des Bereitschaftsmodus kann beispielsweise eine Dauer von 60 Sekunden (s) vorgesehen sein. Falls in diesem Intervall erneut die erste Taste ("Heben") betätigt wird, erfolgt kein Übergang in den Bereitschaftsmodus.

### Beispiel 2:

Eine Überladebrücke weist eine Überladerampe mit einer Klapplippe und einen Rampenantrieb mit einem Motor sowie zwei Magnetventilen auf. Das Heben der Überladerampe erfolgt durch eine Betätigung des Motors sowie des zweiten Magnetventils. Zum Absenken ist dagegen nur das erste Magnetventil vorgesehen. Wird ausgehend von dem Bereitschaftsmodus eine erste Taste ("Heben") gedrückt, wird der Betriebsmodus aktiviert und die Überladerampe von dem Rampenantrieb angehoben. Die erste Taste ("Heben") ist festzuhalten, bis die Klapplippe zeitgesteuert ausgefahren wird. Wird die erste Taste vor dem Ausklappen der Klapplippe losgelassen, sinkt die Überladerampe durch die Betätigung des ersten Magnetventils wieder in ihre Ruheposition zurück, wobei dann ausgehend von dem Loslassen der ersten Taste mit einer vorgegebenen Verzögerung von beispielsweise 60 s erneut ein Übergang in den Bereitschaftsmodus, das heißt ein Abschalten des Motors sowie der Magnetventile erfolgt. Wenn die erste Taste ("Heben") festgehalten wird, bis die Klapplippe ausgeklappt ist, sinkt die Überladerampe wie in dem ersten Beispiel auf die Ladefläche des Nutzfahrzeuges bzw. Containers herunter. Nach dem Betätigen einer zweiten Taste ("Return") wird die Überladerampe zeitgesteuert angehoben, so dass dann das Nutzfahrzeug bzw. der Container die Überladebrücke verlassen kann. Nach einem vorgegebenen Zeitintervall sinkt die Überladerampe wieder herunter, wobei ausgehend von dem Beginn des Absenkens nach einer vorgegebenen Verzögerung wieder der Bereitschaftsmodus aktiviert wird.

### Beispiel 3:

Eine Überladebrücke weist eine Überladerampe mit einer ausfahrbaren Vorschublippe auf. Anders als die zuvor beschriebene Klapplippe kann eine Vorschublippe unterschiedlich weit ausgefahren werden, wozu neben einer ersten Taste ("Heben") und einer zweiten Taste ("Return") eine dritte Taste ("Auflager") vorgesehen ist.

Wird ausgehend von dem Bereitschaftsmodus, bei dem sich die Überladerampe in der Ruheposition befindet, die erste Taste ("Heben") gedrückt, wird der Betriebsmodus aktiviert und die Überladerampe angehoben. Wenn nachfolgend die dritte Taste ("Auflager") nicht betätigt wird, gelangt die Überladerampe wie bei den zuvor beschriebenen Beispielen wieder selbsttätig in die Ruheposition, wobei dann mit einer vorgegebenen Verzögerung wieder ein Übergang in den Bereitschaftsmodus erfolgt. Dabei werden der Motor sowie zwei Magnetventile zum Heben und Senken deaktiviert, das heißt von der Spannungsversorgung getrennt.

Wird dagegen im angehobenen Zustand die dritte Taste ("Auflager") betätigt, wird die Vorschublippe ausgefahren und die Überladerampe auf die Ladefläche eines Nutzfahrzeuges oder Containers abgesenkt. Wie auch im Zusammenhang mit den anderen Ausführungsbeispielen erläutert, kann dann durch eine Betätigung der zweiten Taste ("Return") die Überladerampe zunächst angehoben und dann in die Ruheposition zurückbewegt werden, wobei ausgehend von dem Beginn des Absenkens mit einer vorgegebenen Zeitverzögerung, beispielsweise einer Zeitverzögerung von 60 s, ein Übergang in den Bereitschaftsmodus erfolgt, falls nicht zwischenzeitlich erneut die erste Taste ("Heben") betätigt wird.

## Patentansprüche

1. Verfahren zum Betrieb einer Überladebrücke zum Be- und Entladen von Nutzfahrzeugen oder Containern, wobei die Überladebrücke
eine von einem Rampenantrieb bewegbare Überladerampe, wobei der Rampenantrieb eine Hydraulikanordnung mit einem Motor und zumindest einem Magnetventil umfasst,
Ein- und/oder Ausgabeelemente und
eine Steuerung, an die der Rampenantrieb sowie die Ein- und/oder Ausgabeelemente angeschlossen sind,
umfasst, wobei in einem Bereitschaftsmodus eine erste an die Steuerung angeschlossene Gruppe von elektrischen Einrichtungen, die den Rampenantrieb umfasst, von einer Spannungsversorgung getrennt wird, wobei die erste Gruppe von elektrischen Einrichtungen nach einer Aktivierung aus dem Bereitschaftsmodus in einen Betriebsmodus an die zugeordnete Spannungsversorgung angeschlossen wird,
**dadurch gekennzeichnet, dass**
in dem Bereitschaftsmodus eine zweite an die Steuerung angeschlossene Gruppe von elektrischen Einrichtungen, die zumindest einen Teil der Ein- und/oder Ausgabeelemente umfasst, betriebsbereit ist,
wobei die zweite Gruppe von elektrischen Einrichtungen Überwachungssensoren umfasst,
und dass die Überladerampe durch eine Betätigung eines Eingabeelementes oder durch ein Steuersignal mittels des Rampenantriebes in eine Ruheposition verfahrbar ist, wobei nach der Betätigung des Eingabeelementes oder nach dem Steuersignal der Übergang in den Bereitschaftsmodus nach einer vorgegebenen Zeitverzögerung erfolgt.

2. Verfahren nach Anspruch 1, **dadurch gekennzeichnet, dass** in dem Bereitschaftsmodus auch die Steuerung von einer Netzspannung getrennt wird, wobei zur elektrischen Versorgung der Steuerung ein Energiespeicher vorgesehen ist, der während des Betriebsmodus oder während eines separaten Lademodus aufgeladen wird.

3. Verfahren nach Anspruch 2, **dadurch gekennzeichnet, dass** in dem Bereitschaftsmodus auch die zweite Gruppe von elektrischen Einrichtungen von der Netzspannung getrennt und von dem Energiespeicher mit elektrischer Energie versorgt wird.

4. Verfahren nach einem der Ansprüche 1 bis 3, **dadurch gekennzeichnet, dass** die erste Gruppe von elektrischen Einrichtungen, die im Bereitschaftsmodus von der Spannungsversorgung getrennt wird, neben dem Rampenantrieb zumindest einen weiteren elektromotorischen Antrieb für ein Tor oder eine bewegbare Dichtungsanordnung der Überladebrücke umfasst.

5. Verfahren nach einem der Ansprüche 1 bis 4, **dadurch gekennzeichnet, dass** die Steuerung einen Speicher aufweist, in dem die Dauer des Bereitschaftsmodus und/oder der Energiebedarf während des Bereitschaftsmodus einerseits sowie die Dauer des Betriebsmodus und/oder der Energiebedarf während des Betriebsmodus andererseits abgespeichert werden.

6. Überladebrücke zum Be- und Entladen von Nutzfahrzeugen oder Containern mit
einer von einem Rampenantrieb bewegbaren Überladerampe,
Ein- und/oder Ausgabeelementen und
einer Steuerung, an die der Rampenantrieb sowie die Ein- und/oder Ausgabeelemente angeschlossen sind,
wobei die Steuerung zur Durchführung des Verfahrens nach einem der Ansprüche 1 bis 5 eingerichtet ist.

## Claims

1. A method for operating a dock leveller for loading and unloading commercial vehicles or containers, wherein the dock leveller comprises
a dock leveller ramp which can be moved by a ramp drive, wherein the ramp drive comprises a hydraulic arrangement with a motor and at least one solenoid valve,
input and/or output elements and
a control, to which the ramp drive and the input and/or output elements are connected,
wherein in a first standby mode a first group of electrical devices connected to the control, which group comprises the ramp drive, is disconnected from a voltage supply, wherein the first group of electrical devices, after activation from the standby mode into an operating mode, is connected to the assigned voltage supply,
**characterised in that**
a second group of electrical devices connected to the control, which group comprises at least a part of the input and/or output elements, is ready for operation in the standby mode,
wherein the second group of electrical devices comprises monitoring sensors,
and that the dock leveller ramp can be traversed into a rest position by means of the ramp drive by actuation of an input element or by a control signal, wherein, after actuation of the input element or after the control signal, the transfer into the standby mode takes place after a preset time delay.

2. The method according to claim 1, **characterised in that** in the standby mode the control is also disconnected from a mains voltage, wherein an energy store is provided for the electrical supply of the control, said energy store being charged during the operating mode or during a separate charging mode.

3. The method according to claim 2, **characterised in that** in the standby mode the second group of electrical devices is also disconnected from the mains voltage and is supplied with electrical energy from the energy store.

4. The method according to any one of claims 1 to 3, **characterised in that** the first group of electrical devices, which is disconnected from the voltage supply in the standby mode, comprises, apart from the ramp drive, at least one further electromotive drive for a gate or a mobile sealing arrangement of the dock leveller.

5. The method according to any one of claims 1 to 4, **characterised in that** the control comprises a memory, in which the duration of the standby mode and/or the energy requirement during the standby mode on the one hand and the duration of the operating mode and/or the energy requirement during the operating mode on the other hand are stored.

6. A dock leveller for loading and unloading commercial vehicles or containers comprising
a dock leveller ramp which can be moved by a ramp drive,
input and/or output elements and
a control, to which the ramp drive and the input and/or output elements are connected,
wherein the control is configured for performing the method according to any one of claims 1 to 5.

## Revendications

1. Procédé pour l'exploitation d'un pont de transbordement pour le chargement et le déchargement de véhicules utilitaires ou de conteneurs, dans lequel le pont de transbordement comprend :
une rampe de transbordement déplaçable par un entraînement de rampe, dans lequel l'entraînement de rampe comprend un dispositif hydraulique avec un moteur et au moins une électrovanne,
des éléments d'entrée et/ou de sortie, et
une commande à laquelle l'entraînement de rampe ainsi que les éléments d'entrée et/ou de sortie sont raccordés,
dans lequel, dans un mode de veille, un premier groupe de dispositifs électriques raccordé à la commande, lequel comprend l'entraînement de rampe, est coupé d'une alimentation en courant, dans lequel, après une activation pour passer du mode de veille à un mode opérationnel, le premier groupe de dispositifs électriques est raccordé à l'alimentation en courant associée,
**caractérisé en ce que**,
dans le mode de veille, un deuxième groupe de dispositifs électriques raccordé à la commande, lequel comprend au moins une partie des éléments d'entrée et/ou de sortie, est opérationnel,
dans lequel le deuxième groupe de dispositifs électriques comprend des capteurs de surveillance,
et **en ce que** la rampe de transbordement est déplaçable dans une position de repos au moyen de l'entraînement de rampe par un actionnement d'un élément d'entrée ou par un signal de commande, dans lequel, après l'actionnement de l'élément d'entrée ou après le signal de commande, la transition vers le mode de veille s'effectue après un temps de retard prescrit.

2. Procédé selon la revendication 1, **caractérisé en ce que**, dans le mode de veille, la commande est également coupée d'une tension de secteur, dans lequel on prévoit un accumulateur d'énergie pour l'alimentation électrique de la commande, lequel est chargé pendant le mode opérationnel ou pendant un mode de charge séparé.

3. Procédé selon la revendication 2, **caractérisé en ce que**, dans le mode de veille, le deuxième groupe de dispositifs électriques est également coupé de la tension de secteur et est alimenté en énergie électrique par l'accumulateur d'énergie.

4. Procédé selon l'une des revendications 1 à 3, **caractérisé en ce que** le premier groupe de dispositifs électriques, lequel est coupé de l'alimentation en courant dans le mode de veille, comprend, en plus de l'entraînement de rampe, au moins un autre entraînement à moteur électrique pour une porte ou un dispositif d'obturation mobile du pont de transbordement.

5. Procédé selon l'une des revendications 1 à 4, **caractérisé en ce que** la commande présente une mémoire dans laquelle d'une part la durée du mode de veille et/ou la consommation d'énergie pendant le mode de veille ainsi que d'autre part la durée du mode opérationnel et/ou la consommation d'énergie pendant le mode opérationnel sont mises en mémoire.

6. Pont de transbordement pour le chargement et déchargement de véhicules utilitaires ou de conteneurs avec :
une rampe de transbordement déplaçable par un entraînement de rampe,
des éléments d'entrée et de sortie, et
une commande à laquelle l'entraînement de rampe ainsi que les éléments d'entrée et/ou de sortie sont raccordés,
dans lequel la commande est étudiée pour la mise en oeuvre du procédé selon l'une des revendications 1 à 5.
